# EUROPÄISCHE PATENTSCHRIFT

(11) **EP 1 002 262 B1**
(45) Veröffentlichungstag und Bekanntmachung des Hinweises auf die Patenterteilung: **27.11.2002**
(21) Anmeldenummer: 98943850.2
(22) Anmeldetag: 05.08.1998
(51) Int. Cl.: G06F 1/00

(54) **VORRICHTUNG UND VERFAHREN ZUR GESCHÜTZTEN AUSGABE ELEKTRONISCH ÜBERTRAGENER UND GESPEICHERTER DOKUMENTE**
DEVICE AND METHOD FOR THE PROTECTED OUTPUT OF ELECTRONICALLY TRANSMITTED AND STORED DOCUMENTS
DISPOSITIF ET PROCEDE PERMETTANT LA SORTIE PROTEGEE DE DOCUMENTS MEMORISES TRANSMIS PAR VOIE ELECTRONIQUE

(30) Priorität: 05.08.1997 DE 19733807; 11.12.1997 DE 19755182
(43) Veröffentlichungstag der Anmeldung: 24.05.2000
(73) Patentinhaber: BrainShield Technologies, Inc., New York, NY 10022 (US)
(72) Erfinder: Wittkötter, Erland, Dr., 32257 Bünde (DE)
(74) Vertreter: Behrmann, Niels, Dipl.-Ing.
(86) Internationale Anmeldenummer: EP9804888
(87) Internationale Veröffentlichungsnummer: WO99008171

(56) Entgegenhaltungen:
- EP-A- 0 798 619
- WO-A-92/09160
- WO-A-96/35158
- WO-A-97/14087
- DE-A- 19 634 712
- A.K. CHOUDHURY ET AL. : "Copyright Protection for Electronic Publishing Over Computer Networks" IEEE NETWORK, Bd. 9, Nr. 3, Mai 1995 - Juni 1995, Seiten 12-20, XP000505280 New York, US

## Beschreibung

Die vorliegende Erfindung betrifft eine Vorrichtung zur geschützten Ausgabe elektronisch übertragener und gespeicherter, mit einem elektronischen Kopierschutz versehener Dokumente sowie ein entsprechendes Ausgabeverfahren, insbesondere ein Verfahren zum Betreiben der Vorrichtung. Die vorliegende Erfindung betrifft insbesondere den Schutz von elektronischen Dokumenten auf einem Computersystem, der selbst dann noch wirksam ist, wenn ein für das Dokument vorgesehener Kopierschutzmechanismus ausgeschaltet oder überwunden wurde.

Aus dem Stand der Technik sind zahlreiche Vorrichtungen und Verfahren zur elektronischen Publikation von Dokumenten bekannt, wobei als elektronische Dokumente im Sinne der vorliegenden Anmeldung nicht nur Texte und Bilder, sondern auch Datenbanken, Audiomedien, Videos, Animationen, interaktive Filme, Steuerprogramme, aktive und passive Computerprogramme und dergleichen nutzbare Anordnungen von elektronischen Daten verstanden werden. Dabei liegen urheberrechtlich wertvolle Dokumente oftmals in einer gegen Kopieren geschützten Form vor, sei es durch geeignete Codier- oder Verschlüsselungsverfahren, durch spezielle (proprietäre) Formate einer Datei, charakterisierende und/oder individualisierende Wiedererkennungsmerkmale oder durch geeignet eingestellte, geheime Software-Schnittstellen. Auch existieren Lösungen, die zum Decodieren notwendige Daten oder Informationen extern, z.B. über ein Datenkommunikationsnetz, heranführen.

Sämtliche derartige Lösungen besitzen jedoch den Nachteil, dass ein elektronisches Dokument, sobald durch eine geeignete Maßnahme der Kopierschutz oder Verwendungsschutz umgangen wurde, jederzeit lokal manipuliert und insbesondere auch beliebig und unbeschränkt weitergegeben werden kann. Durch den digitalen Charakter der Dokumente sind nämlich ohne Qualitätsverlust beliebige Kopiervorgänge möglich, so dass nach einem erfolgreichen Entfernen eines Kopierschutzes dann eine -- illegale -- Kopie vorhanden ist, die qualitativ gegenüber dem Original keinerlei Nachteile besitzt.

Der Stand der Technik bietet bisher keine Maßnahmen, die bei Überwindung des Kopierschutzes angewendet werden können, um einen Endbenutzer bei der Entscheidung zwischen einer illegalen, uneingeschränkt verwendbaren, digitalen Kopie und einem Original, technisch unterstützend in Richtung der Benutzung des Originals zu bewegen.

Vom Stand der Technik sind Kopierschutzverfahren bekannt, bei denen ein Paßwort oder ein Schlüssel als Zusatzdaten über das Netzwerk geliefert werden müssen. Der Nachteil dieser Verfahren ist, dass nur eine sehr begrenzte Anzahl von Barrieren überwunden werden muß, um das Dokument in einen Zustand zu überführen, bei dem ein Zugriff ohne eine Online-Autorisierung möglich erscheint. Die Art und die Struktur der Zusatzdaten, die bei diesem Verfahren zur Freischaltung benutzt werden müssen, sind bereits bei der Generierung des Dokumentes oder vor dem Zeitpunkt der Freischaltung weitestgehend festgelegt. Die zusätzlich herangeführten Daten enthalten zudem keinen Nutzen, der unabhängig von dem Freischaltungsverfahren gesehen werden kann. Das Heranführen der Daten geschieht nur aus Gründen, die mit der unmittelbaren Sicherheit zu tun haben und nicht aus Gründen, die mit der Verbesserung des Nutzens eines elektronischen Dokumentes verbunden sind.

Insbesondere bei elektronischen Dokumenten, die einen beträchtlichen Wert für den berechtigten Urheber bedeuten, ist also mit einer erfolgreichen Überwindung des Kopierschutzes das Recht und die Möglichkeit des Autors zur wirksamen Durchsetzung seiner Eigentumsrechte an dem Dokument beschränkt oder gar unmöglich gemacht.

Diese Problematik wird dadurch verschärft, dass zahlreiche Dienst- oder Hilfsprogramme für Computersysteme existieren, deren Aufgabe das Beseitigen eines Kopierschutzes an einem elektronischen Dokument ist, und deren Leistungsfähigkeit -- mit den vorhandenen Kopierschutzmechanismen -- ständig zunimmt.

Aus der WO 97 14087 A ist ein System sowie ein Verfahren für das Management von Copyright-geschützten Daten nach dem Oberbegriff des Patentanspruches 1 bekannt. Nach dieser Technologie wird einem Nutzer der Daten in der Art einer Online-Lizenz die Berechtigung zur selektiven oder vollständigen Nutzung der geschützten Daten eingeräumt.

Die WO 92 09160 offenbart ein System sowie ein Verfahren zum geschützten Aktivieren von Programmen in einem PC. Dabei wird dem PC über eine Datenleitung von einem Registrierungscomputer ein fälschungssicheres Teilprogramm geschickt, ohne dass das entsprechende Programm nicht lauffähig wäre.

Die EP 0 798 619 A beschreibt ein System sowie ein Verfahren zum Erhöhen der Sicherheit bei der Verteilung von elektronischen Dokumenten. Es werden die Dokumente durch Modifikationen des Dokumenttextes mit einem "Fingerabdruck" versehen, und durch Überprüfen der Textmodifikationen einer unautorisierten Kopie kann eine Quelle festgestellt werden.

Ferner schlagen A.K. Choudhury et al. in "Copyright Protection for Electronic Publishing Over Computer Networks", IEEE Network, Bd. 9, Nr. 3, Mai 1995 - Juni 1995, Seiten 12-20, vor, je nach Wichtigkeit eines elektronischen Dokuments Authentizitäts- und Qualitätsbeurteilungen einzuführen.

Aufgabe der vorliegenden Erfindung ist es daher, elektronisch übertragene und gespeicherte Dokumente auch selbst dann noch zu schützen, wenn ein Kopierschutzmechanismus dieser Dokumente entfernt oder überwunden worden ist, wobei als "Schützen" im Sinne der vorliegenden Erfindung jegliches Erschwernis bzw. jegliche Verschlechterung der Nutzungsmöglichkeiten an einem illegal kopierten Dokument gegenüber einem Original (oder einer legalen, autorisierten Kopie) angesehen werden sollen. Auch ist ein entsprechendes Verfahren zu schaffen.

Die Aufgabe wird durch die Vorrichtung mit den Merkmalen des Patentanspruches 1 sowie das Verfahren mit den Merkmalen des Patentanspruches 7 gelöst.

Vorteilhafte Weiterbildungen der Erfindung sind in den Unteransprüchen beschrieben.

Vorteilhaft wird im Rahmen der vorliegenden Erfindung das grundlegende Lösungsprinzip ausgenutzt, das zu schützende, elektronische Dokument in eine die Zusatzoperation und/oder die zusätzlichen Daten anbietende Systemumgebung einzubetten, wobei der dadurch zu erreichende, zusätzliche Nutzen durch Wirkung der Abfrage- und Prüfeinheit nur realisiert werden kann, wenn der Kopierschutz nicht verletzt oder überwunden wurde. Voraussetzung dafür ist, dass der angewendete Kopierschutz von einer Art ist, dass dessen Überwindung oder Verletzung durch geeignete Kriterien -z.B. innerhalb des Dokuments oder innerhalb zu benutzender Schnittstellen der Software-Umgebung -- durch die Abfrageund Prüfeinheit erkannt werden kann.

Darüber hinaus wird erfindungsgemäß vorteilhaft mindestens ein Online-Kontakt über ein Datenkommunikationsnetz ("Session") benutzt, um die zusätzlichen Daten herbeizuführen oder die Zusatzoperation zu ermöglichen. Auf diese Weise ist in besonders sicherer und flexibler Weise das Erzeugen des zusätzlichen Nutzen- bzw. Informationswerts für den (autorisierten) Benutzer möglich.

Als elektronisch übertragene und gespeicherte Dokumente im Rahmen der vorliegenden Erfindung sind gemäß der oben gegebenen Definition elektronische Dateien für die Erfindung geeignet, die durch zusätzliche, insbesondere nur extern vorhandene Daten einen Zusatznutzen erhalten können, wobei die von der Erfindung umschlossenen elektronischen Dokumente mit diesem Zusatznutzen *separierbar* zu verbinden sind. Die erfindungsgemäßen Zusatzoperationen betreffen dann insbesondere Datenverarbeitungs- und Betriebsvorgänge, die diesen Zusatznutzen bewirken.

Entsprechend sind Zusatzoperationen im Rahmen der Erfindung Vorgänge auf einem Computersystem, die mit, auf und/oder zusammen mit dem Dokument durchgeführt werden können und einen Vorteil gegenüber dem ursprünglichen Dokument liefern, und die ohne diese Vorgänge auf dem Computersystem nicht vorhanden sind. Konkret können derartige Zusatzoperationen in dem Bereitstellen eines Online-Zugangs für ein (selektives) Update des Dokuments, einer Verwaltung von Stichworten und Notizen, einer Darstellung von zusätzlichen Verwaltungsdaten, einer Abspeicherung und/oder Darstellung von Lesezeichen oder Bookmarks, einer zusätzlichen Abspeicherung/Darstellung vom Benutzer vorgenommenen farblichen Markierung von Textpassagen, einer zusätzlichen Zugangsschnittstelle für Recherchen in zugeordneten oder übergeordneten Archiven, der Benutzung weiterer Dienstleistungen wie elektronischer Datenaustausch mit betreffenden Autoren oder Verlagen sowie in der Benutzung eines für das Dokument vorgesehenen elektronischen schwarzen Bretts (elektronisches Blackboard) bestehen. Dabei können die Zusatzinformationen als Nutzungsrechte kostenlos im Zusammenhang mit der Registrierung des elektronischen Dokumentes erworben worden sein. Genauso gut können diese Zusatznutzen und -daten separat und unbhängig vermarktet und über eine Abrechnungseinheit abgerechnet werden. Im Rahmen der Erfindung sind insbesondere auch die folgenden Maßnahmen bevorzugte Beispiele für Zusatzoperationen bzw. zusätzliche Daten.

Als Datenverwaltung kann auch z.B. die Verwaltung der Nutzungsrechte an Dokumenten der Teile von Dokumenten, die von dem Endbenutzer bezahlt oder sonst erworben wurden, betrachtet werden. So kann dem Benutzer eine wiederholte Benutzung ohne Bezahlung selektiv angeboten werden.

Außerdem kann auf dem dient-Rechner zu einem ausgewählten Dokument von der Server-Verwaltungseinheit eine Übersicht über die verschiedenen Dokumenten-Versionen oder Editionen bzw. Update-Stufen ausgegeben werden.

Als Zusatznutzen kann außerdem eine Kennzeichnung der Änderungen zwischen zwei oder mehreren beliebigen Versionen ausgegeben werden.

Die Ausgabe weiterer Dokument-Titel, die sich im Themenkreis des zu schützenden Dokumentes befinden, kann ebenfalls ein Zusatznutzen sein. In die gleiche Kategorie paßt auch die Ausgabe einer Passage oder einer Liste von Passagen aus dem zu schützenden Dokument, die nach Abfrage eines der verschiedener Retrievalsysteme die Leseintention des Benutzers am Besten trifft.

Ein weiterer Nutzen kann in der Ausgabe einer Übersetzung oder Übersetzungshilfe durch die Server-Verwaltungseinheit sein. Diese kann z.B. in den Untertiteln zu einem Film bestehen, die nicht Teil des Films sind. Alternativ kann es aktuelle Hilfen zur Übersetzung bestimmter Passagen eines Dokumentes geben, die sich bei der Benutzung eines Dokumentes ergeben. Dazu kann auch die visuelle und/oder parallele Ausgabe eines Musiktextes und/oder der zugehörigen Übersetzung gehören.

Ein weiterer Zusatznutzen kann in der gezielt abgefragten Ausgabe oder Standardausgabe von Benutzerstatistiken liegen, die mit dem elektronischen Dokument angelegt worden sind oder erzeugt werden können. Dieser Nutzen kann dem Benutzer eine indirekte Orientierung über die Qualität des Dokumentes oder einer Passage geben. Zur Ausgabe könnte dann z.B. die Häufigkeit der Zweitbenutzung bestimmter Passagen, eine Übersicht oder Ranking über die am Häufigsten benutzten Passagen oder die Benutzungshäufigkeit vergleichbarer Dokumente gehören.

Ein weiterer Schutz durch Verwaltung kann auch darin bestehen, die Namen der Personen auszugeben, die bereits Kentnis von dem Dokument erhalten haben. Neben der Zusatzinformation für den direkten Benutzer kann auch ein Zusatznutzen für einen oder mehrere weitere beliebige Dritte hergestellt oder erworben werden, indem diesen der Zugang zu dem Dokument oder ausgewählten Diensten, die diesem Dokument zugeordnet werden können, ermöglicht wird.

Ein weiterer Zusatznutzen kann darin bestehen, dass einem Dokument, zum Beispiel als Formular, an vorbestimmten Positionen von einem Client-Benutzer Daten manuell oder von einem Skript gesteuert eingetragen werden können, die auf der Serverseite schließlich mit konkreten Aktionen verbunden sind. Die Integrität des Dokumentes, d.h. der Schutz vor Veränderung, wird durch den konkreten Verwendungsnutzen hergestellt. Der Kopierschutz kann somit jeweils auch als ein Schutz vor mißbräuchlicher Änderung des Dokumentes verstanden werden.

Es ist nicht ausgeschlossen, dass das kopiergeschützte Dokument sowohl in seinem (ursprünglichen) Originalformat als auch in einem umgewandelten Format (mit überwundenem Kopierschutz) auf dem Computersystem ausgegeben werden kann; im Falle des Entfernens des Kopierschutzes entsteht dem Benutzer jedoch ein Nutzennachteil. (Generell wird im Rahmen der vorliegenden Erfindung als Kopierschutzverfahren im weiteren Sinne nicht nur jeglicher Weg verstanden, der dazu geeignet ist, eine unberechtigte Kopie von einem elektronischen Dokument zu verhindern oder zu erschweren, sondern auch ein Verfahren, das zu einer Qualitätsreduktion einer Kopie beiträgt; dies kann im Fall von elektronischen Dokumenten etwa dadurch erfolgen, dass ein Bildschirminhalt, etwa mit einem dargestellten Text, als solcher kopiert und verbreitet wird. Für die nachfolgende Diskussion wird ein entsprechend manipuliertes Dokument mit überwundenem Kopierschutz als *geknackt* bezeichnet.)

Der Kopierschutz ist darüber hinaus nicht nur als Schutz vor der illegalen Erstellung einer Kopie vom Original zu verstehen, sondern als Kontrolle des Herausgebers, die Verwendung einer Kopie im vorgesehenen Sinne zu verhindern oder zu erschweren, also im Sinne eines Verwendungsschutzes.

Ein Verwendungsschutz kann auch darin bestehen, dass eine Kopie erkennt, dass sie in einem veränderten Zusammenhang eingesetzt wird, und dass sich daraus eine erneute Abrechung ergeben kann, mit dem Ziel, dass es schließlich einer erneuten Freigabe für die Verwendung des Dokumentes bedarf.

Selbst wenn daher das geknackte Dokument innerhalb eines Editors, einer Betrachtungseinheit ("Viewer") oder einer Datenbank lesbar oder benutzbar ist, ist es jedoch erfindungsgemäß nicht möglich, den Zusatznutzen in Form der Zusatzoperationen und/oder der zusätzlichen Daten zu benutzen. Entsprechend liegt erfindungsgemäß der Nachteil der illegalen Kopien in dem Fehlen dieser zusätzlichen Nutzungsmöglichkeiten.

Die Zusatznutzen eines Dokumentes bestehen aus den zusätzlichen Möglichkeiten, die sich innerhalb eines geeigneten Computerprogrammes durch die Hinzunahme eines oder mehrerer weiterer Merkmale und/oder Informationen oder einer oder mehrerer weiterer Funktion oder Operation, die sich außerhalb des lokal abgeschlossenen Datenbestands und/oder des lokal abgeschlossenen Funktionsumfangs des elektronischen Dokuments ergeben können.

Als Online im Sinne der vorliegenden Erfindung ist ein Kontakt zu verstehen, der digitale Informationen oder digitale Dienstleistungen außerhalb des lokalen Computersystems über das Datenkommunikationsnetzwerk in Anspruch nimmt. Während hierfür etwa das Internet bevorzugt ist, kann das nachträgliche Heranführen von Zusatzinformationen auch über einen anderen physikalischen Kanal geschehen, als über das bidirektionale Internet. Die Zusatzdaten können nach Registrierung oder Verifikationsdialog auch auf einem unidirektionalen Kommunikationsmedium (Broadcast, Satellit, unidirektionales Breitbandkabel) zum Client transportiert werden.

Eine Softwareumgebung besteht aus Betriebssystemanweisungen oder Operationen, die innerhalb eines Computerprogrammes als Schnittstellen angeboten werden.

Eine Softwareumgebung kann als sicher bezeichnet werden, wenn der zeitliche oder materielle Aufwand, eine geschickte Kombination von Kommandos innerhalb der Softwareumgebung zu finden, zu groß ist, als dass es sich unter ökonomischen Gesichtspunkten für einen Hacker und/oder für den Benutzer das Verwenden des geknackten Dokumentes sich lohnen würde.

Die Integration eines elektronischen Dokumentes in eine Softwareumgebung bedeutet, dass die Möglichkeit besteht, die aus der Softwareumgebung angebotenen Anweisungen und Operationen sinnvoll auf das elektronische Dokument anzuwenden. Eine Integration kann auch die nach festen Regeln oder eine nach einem Algorithmus durchgeführte Konvertierung sein, deren Ausgabeprodukt anschließend benutzt werden kann.

Unter Benutzungsrecht wird das Recht eines Benutzers verstanden, ein Dokument in einem festgesetzten Rahmen verwenden zu dürfen. Dieses Benutzungsrecht kann zeitlich oder räumlich begrenzt sein. Ein Benutzungsrecht impliziert insbesondere kein Recht zur Weitergabe an Dritte.

Entsprechend ermöglicht die erfindungsgemäße Verarbeitungsund Steuereinheit sowohl eine passive Verwaltung der elektronischen Dokumente, bei welcher Daten und Relationen in einer strukturierten, objektorientierten oder relationalen Weise abgespeichert sind. Die Verarbeitungs- und Steuereinheit kann auch als Software-Umgebung realisiert sein, in welche optional lokale Dienste oder Programme integriert werden können oder durch welche Dienstleistungen von einem externen Server mit Hilfe einer Datenfernübertragung über das Datenkommunikationsnetz angenommen oder wahrgenommen werden können. Darüber hinaus ermöglicht die Verarbeitungsund Steuereinheit eine aktive Verwaltung, etwa durch die benutzer-geführte Eingabe von Notizen zu einem Dokument; außerdem kann die Aktualisierung der verwalteten Dokumente als derartiges, aktives Management angesehen werden. (Hierzu kann z.B. auch eine von einem externen Server erfolgende Mitteilung, dass eine Veränderung am Dokument vorgenommen oder ein weiterer Kommentar an einem öffentlichen Blackboard zu dem Dokument abgegeben wurde, als aktiver Verwaltungsvorgang, gesteuert durch die Verarbeitungs- und Steuereinheit, angesehen werden).

Ein proprietäres Dokumentenformat kann zum Schutz vor einer unautorisierten Benutzung des Inhaltes eine Verschlüsselung aufweisen. Ein Dokument kann entweder als eine passive Software oder als ein aktives Programm angesehen werden, bei der eine sinnvolle Nutzung nur durch die Bereitstellung von den dazugehörigen Softwareschnittstellen einer Softwareumgebung möglich ist.

Die auf die beschriebene Art erfolgende Integration des elektronischen Dokuments in die durch die lokale Verarbeitungs- und Steuereinheit geschaffene Verwaltungseinheit kann dabei durch eine Onlineprozedur ermöglicht werden, kann alternativ aber auch lokal erfolgen.

Bei dem Schutz durch Verwaltung geht es um die Ausgrenzung illegaler Kopien. Der Schutz durch Verwaltung bietet eine zweite Barriere beim Verwendungsschutz, die dann automatisch wirksam wird, wenn die illegale Kopie oder das Original von einem unbefugten Benutzer verwendet wird. Zur Kennzeichnung illegaler Benutzung muß eine Registrierung des Dokumentes vorausgehen. In diesem Sinne bietet das in dieser Erfindung beschriebene Verfahren für den Benutzer des Dokumentes nur einen eingeschränkten Gebrauch bei einer nicht registrierten Benutzung.

Besonders bevorzugt ist eine zusätzliche Eingabe-Schnittstelle vorgesehen, welche als Reaktion auf ein Freigabesignal der Abfrage- und Prüfeinheit eine elektronische Kommunikation, insbesondere über das Datenkommunikationsnetzwerk, mit einem als zusätzliche Information identifizierten Autor des elektronischen Dokuments einzuleiten bzw. durchzuführen. Auf diese Weise wird gerade bei dynamischen, einer Weiterentwicklung und/oder einem (z.B. wissenschaftlichen) Dialog unterworfenen Unterlagen eine angemessene und geeignete Bearbeitung unterstützt. Auch entsteht auf diese Weise völlig neue, effiziente Wege zum wissenschaftlichen Arbeiten.

Eine zeitliche Begrenzung der Benutzung läßt sich auf einem lokalen Rechner, der unter der totalen Kontrolle eines Fremden steht, nicht durchführen, da jederzeit die Systemzeit auf dem Rechner umgestellt werden kann. Ein Schutz durch Verwaltung würde dagegen bedeuten, dass ein Benutzer, in einem passiven Sinne, nicht die Gewißheit haben kann, dass sein gehacktes Dokument noch aktuell ist, oder ob nicht noch weitere relevante Informationen fehlen. Der externe Server, der im Rahmen der Sicherheit durch Verwaltung angesprochen werden muß, kann durch diese Manipulation nicht getäuscht werden. In einem aktiven Sinne kann aber auch die Benutzung von den anderen verwalteten Dokumenten, nach einer lokalen Manipulation eingeschränkt werden.

Die illegale Änderung eines Benutzerstatus von einem verwalteten Dokument kann bei einem Schutz durch Verwaltung die normale Benutzung anderer Dokumente u.a. ebenfalls so lange geändert oder nur partiell geändert aber störend eingeschränkt werden, wie diese nicht vorgesehene Statusänderung andauert. Der integrierende und zusammenfassende Charakter von Verwaltung bietet die Möglichkeit, durch die Gefahr des Verlustes oder der Verletzung einzelner Verwendungsrechte aus der Menge aller anderen Dokumente, den Schutz eines einzelnen Dokumentes von der Gesamtheit übertragen zu bekommen. Die Mitteilung, dass es sich um eine temporäre und/oder konditionierte Änderung des Benutzungsstatus handelt, kann dem Benutzer in der Absicht gegeben werden, den Anwender dazu zu bringen, den vorgesehenen und berechtigten Status des vorher veränderten Dokumentes wieder herzustellen oder ggf. die illegale Kopie zu löschen.

Die lokale Installation und Eintragung der Dokumente in dem Verwaltungsprogramm sollte in einer bevorzugter Weise nur zusammen mit der Bezahlung und/oder einer Online-Registrierung und/oder bei der ersten Benutzung vorgenommen werden. Eine nachträgliche Installation und Eintragung des Dokumentes in das Verwaltungsprogramm kann nur dann erfolgen, wenn der Nachweis der Bezahlung oder der Nachweis für die zuverlässige Freischaltung sicher geführt werden kann. Ein nachträglich installiertes und gegebenenfalls nicht bezahltes Dokument sollte von einem korrekt installierten Dokument zuverlässig unterschieden werden können. Ein zusätzliches Abrechnungsmodul kann für eine nachträgliche Bezahlung und Registrierung sorgen. Ein autorisierter Benutzer kann von einem nichtautorisierten Benutzer nur dann unterschieden werden, wenn ein entsprechendes Identifikationsmodul oder Authentifizierungsmodul die Unterscheidung zwischen Benutzern zuläßt und so die Nutzungsrechte und damit auch die Verwendungsmöglichkeit nur den berechtigten Benutzern zuordnet.

Weiter vorteilhaft findet eine Registrierung eines betreffenden Dokuments in einer lokalen und/oder externen Registriereinheit statt; durch Wirkung dieser Registriereinheit erfolgt eine dauerhafte, überprüfbare Einbettung des elektronischen Dokuments in die Systemumgebung zum Nutzen der Zusatzoperationen und/oder der zusätzlichen Daten. Insbesondere wird es dann der lokalen Verarbeitungs- und Steuereinheit ermöglicht, durch Abfragen der externen oder lokalen Registrierungseinheit den Authentizitätsstatus eines Dokuments zu überprüfen, ohne dass eine (erneute) Überprüfung des eigentlichen Dokuments hinsichtlich des Kopierschutzes notwendig sein muß. Insbesondere kann eine Registrierung auch in einer anonymen Weise -- ohne konkrete Identifizierung eines Nutzers -- erfolgen.

Weiter bevorzugt ist zudem vorgesehen, dass der erfindungsgemäße Onlinekontakt zwischen der Verarbeitungs- und Steuereinheit und der externen Datenverarbeitungsanlage verschlüsselt, und weiter bevorzugt nach einer vorhergehenden, individualisierenden Schlüsselvereinbarung, erfolgt.

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in
- Fig. 1:: ein Blockschaltbild der erfindungsgemäßen Vorrichtung zum geschützten Ausgeben elektronisch übertragener und gespeicherter Dokumente gemäß einer ersten, bevorzugten Ausführungsform der Erfindung (best mode) und
- Fig. 2:: ein Flußablaufdiagramm mit wesentlichen Verarbeitungsschritten des erfindungsgemäßen Verfahrens zum geschützten Ausgeben der elektronischen Dokumente.

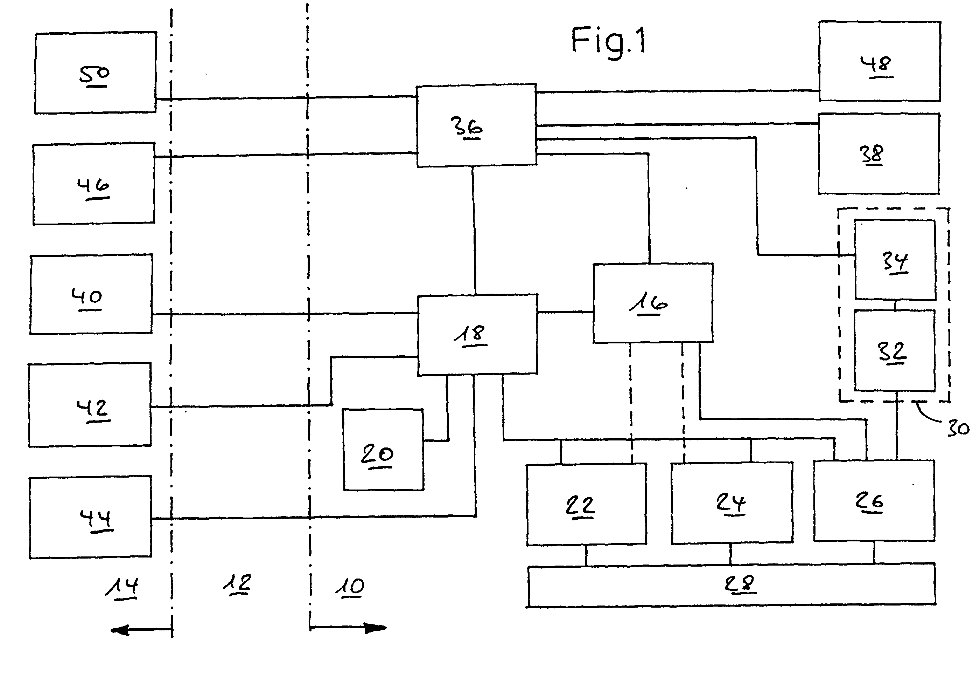

Ein lokales Computersystem (als PC) 10 ist, wie in der Fig. 1 mittels der Strichpunkt-Linien gezeigt, über ein Datenkommunikationsnetzwerk 12 mit einer externen Datenverarbeitungsanlage 14 verbunden, wobei beispielhaft das Netzwerk 12 als öffentlich zugängliches Datennetz -- z.B. das Internet -- und die externe DV-Anlage als Remote-Host realisiert sein können.

Lokal weist das Computersystem 10 eine lokale Eingabeeinheit 16, z.B. eine Tastatur, auf, die mit einer lokalen, zentralen Steuer- und Verarbeitungseinheit 18 verbunden ist. Die Einheit 18 ist beispielsweise durch CPU und zugehörige Peripherieteile des PC realisiert; mit der Steuereinheit 18 ist ein lokaler Datenspeicher, etwa ein Arbeitsspeicher oder ein Festwertspeicher, verbunden.

Die zentrale Steuereinheit 16 wirkt zudem ausgabeseitig auf eine lokale Ausgabeeinheit 22, eine lokale Service-/Diensteinheit 24 sowie eine lokale Dokumentausgabeeinheit 26, die jeweils mit entsprechend eingerichteter Ausgabe-Hardware 28 verbunden sind. Genauer gesagt sind die Einheiten 22, 24, 26 verschiedene Anwendungsprogramme, Schnittsteilen oder sonstige, für eine Dokumentausgabe wesentliche Module, die, durch die zentrale Steuereinheit 18 angesteuert, eine jeweilige Ausgabeoperation für die Ausgabe-Hardware, z.B. einen Bildschirm, Audio-Hardware oder einen Drucker, vorbereiten und steuern können. Beispielsweise kann die lokale Ausgabeeinheit 22 ein Viewer oder ein Druckertreiber sein, die lokale Serviceeinheit 24 eine Verknüpfungseinrichtung zum Herstellen einer Verbindung zu weiteren, lokal oder extern vorhandenen Dokumenten, ein Suchmodul zum gezielten Suchen nach einzelnen Worten in einem Text, ein Editor zum Erfassen von Notizen oder Anmerkungen, und die Dokumentausgabeeinheit 26 kann ein elektronisches Ausgabemodul zur Versendung des Dokuments etwa als eMail aufweisen. Je nach spezifischer Einrichtung der Einheiten 22, 24, 26 ist eine unmittelbare Verbindung zur bzw. Steuerung durch die lokale Eingabeeinheit 16 vorgesehen.

Insbesondere ist die Dokumentausgabeeinheit 26 auch so zu verstehen, dass damit unmittelbar ein elektronisches Dokument, selbst in geknacktem Zustand, also bei entferntem oder überwundenem Kopierschutz, ausgegeben werden kann; dann allerdings ohne den erfindungsgemäß realisierten Mehrwert. In der praktischen Realisierung kann also die Dokumentausgabeeinheit ein Texteditor o.ä. sein, welcher die Ausgabe des Dokuments übernehmen kann. Dieser Sachverhalt wird i. ü. in der Fig. 1 auch dadurch deutlich, dass das in einem Dokumentspeicher 30 schematisch mit 32 bezeichneten Dokument -- ohne Kopierschutz -- direkt auf die Dokumentausgabeeinheit 26 geleitet werden kann, während das (legale, autorisierte) Dokument 32 mit Kopierschutz (schematisch durch das Bezugszeichen 34 bezeichnet) unmittelbar nicht aus dem lokalen Computersystem 10 ausgegeben werden kann.

Vielmehr ist zu diesem Zweck eine Abfrage- und Nutzungsrechtseinheit 36 vorgesehen, die mit der zentralen Steuerung 18 sowie der lokalen Eingabeeinheit 16 zusammenwirkt und als Reaktion auf eine entsprechende Anforderung, z.B. durch eine Tastatur 16, ein Dokument 32 mit Kopierschutz 34 aus dem Dokumentspeicher 30 ausliest.

Bevor dann eine Ausgabe dieses Dokuments, ggf. unter Benutzung der erfindungsgemäßen Zusatzoperationen, wie sie etwa auch durch die Einheiten 22, 24 angeboten werden, möglich ist, erfolgt in der Abfrageeinheit 36 eine Prüfung darauf, ob der Kopierschutz noch vorhanden ist, und zwar durch eine der Abfrageeinheit 36 zugeordnete, lokale Prüfeinheit 38. Diese bewirkt, dass bei positiver Feststellung des Vorliegens des Kopierschutzes (also kein unautorisiert kopiertes Dokument) über die zentrale Steuereinheit 18 dann in der beabsichtigten Weise das Dokument mit Zusatzdaten versehen oder mit einer Zusatzoperation verknüpft werden kann, die durch Zugriff über das Datenkommunikationsnetz 12 auf eine externe Zusatzdateneinheit 40 und/oder eine externe Service/Dienstleistungseinheit 42 erhalten werden. Daraufhin wird dann ein entsprechend verknüpftes bzw. modifiziertes Dokument an eine geeignete lokale Ausgabeeinheit 22 bis 26 weitergegeben und über diese bestimmungsgemäß ausgegeben.

Auch ist es möglich, dass zum Zwecke des Durchführens der zusätzlichen Operation die zentrale Steuereinheit 18 über das Datennetz 12 auf einen externen Datenspeicher 44 zugreift, um sich von dort geeignete Daten zu holen oder mit diesem Speicheroperationen durchzuführen.

Das Ausführungsbeispiel der Fig. 1 zeigt zudem, dass die Abfrageeinheit 36 zusätzlich über das Netzwerk 12 auf eine externe Prüfungseinheit 46 (zusätzlich oder alternativ zur lokalen Prüfungseinheit 38) zugreifen kann, um den aktuellen Schutzstatus eines elektronischen Dokuments festzustellen.

Wie weiter in Fig. 1 gezeigt, ist sowohl lokal mit der Einheit 48 als auch extern über das Netzwerk 12 mit der Einheit 50 eine Registrierungseinheit für das jeweilige Dokument vorgesehen, mit welchem dann nach erfolgter Prüfung auch Kopierschutz durch die Prüfungseinheiten 38 und/oder 46 der Prüfstatus eines jeweiligen elektronischen Dokuments festgehalten und zum Zugriff durch die zentrale Verarbeitungseinheit 18 bereitgestellt werden kann. Auf diese Weise ist bei erneutem Zugriff bzw. bei erneut beabsichtigter Ausgabe des elektronischen Dokuments lediglich eine Überprüfung der Registrierungseinheiten 48 und/oder 50 notwendig.

Insgesamt ist durch die beschriebene Vorrichtung eine sichere Bereitstellung des elektronischen Dokuments für eine gewünschte Ausgabe ermöglicht, und es ist insbesondere sichergestellt, dass ein unautorisierter Benutzer des Dokuments, der dieses etwa durch einen unzulässigen Kopiervorgang erlangt hat, dieses nicht unter Nutzung der erfindungsgemäß vorgesehenen zusätzlichen Operationen und/oder zusätzlichen Daten ausgeben kann.

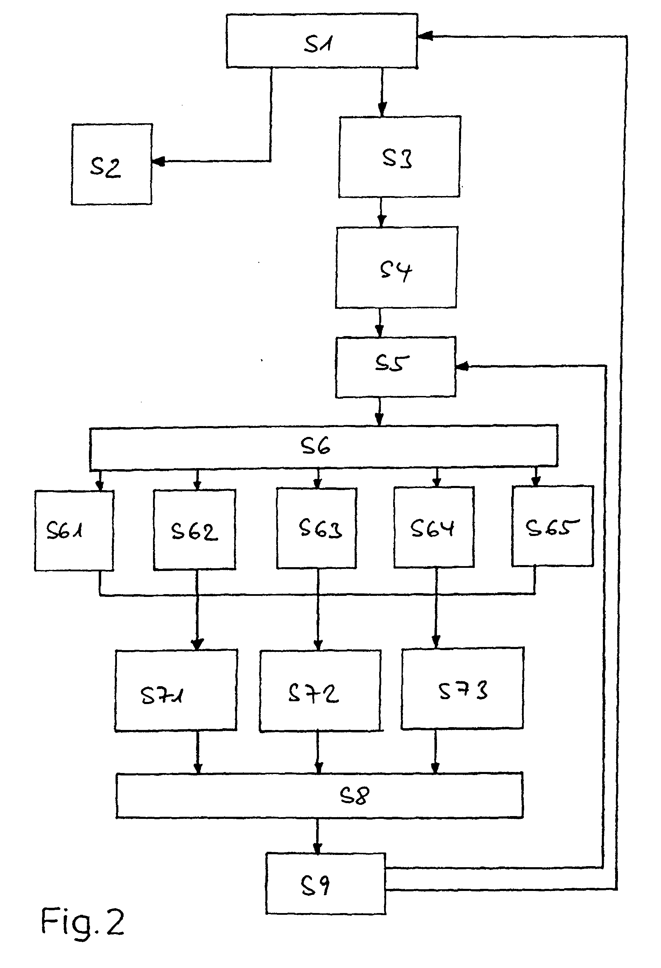

Im weiteren soll unter Bezug auf die Fig. 2 die Funktionsweise der Anordnung gemäß Fig. 1 an zwei konkreten Beispielen erläutert werden.

Im ersten Beispiel wird angenommen, dass ein in dem Dokumentspeicher 30 gespeicherter Text in Form einer technischen Beschreibung von einem Benutzer auf einem Bildschirm gelesen und danach von einem Drucker ausgegeben werden soll. Vorteilhaft ist zudem vorgesehen, dass auf Seiten der externen Datenverarbeitungsanlage 14, einem Host-Rechner des Herstellers von technischen Anlagen und Verfassers der technischen Beschreibung, eine jeweils aktuellste Fassung dieses technischen Textes über das Datennetz 12 zur Verfügung gestellt wird, und zwar nur den Benutzern, die über (veraltete) Fassungen des Dokuments verfügen, sofern eine im Rahmen der Erfindung vorgesehene Registrierung und Authentifizierung erfolgt ist.

Entsprechend wird im Flußdiagramm der Fig. 2 in einem Schritt S1 durch Eingabe in die lokale Eingabeeinheit (Tastatur) 16 das gewünschte Dokument aus dem Dokumentspeicher 30 aufgerufen. Dieses Dokument ist mit einem Kopierschutz 34 in Form eines proprietären Dateiformats versehen, der den Benutzer als autorisiert ausweist. Nun könnte zwar der Benutzer in einem Schritt S2 durch Benutzung eines geeigneten Leseprogrammes das Dokument 32 auch direkt, und insbesondere unter Umgehung des Kopierschutzes, auslesen und auf einem Bildschirm oder Viewer ausgeben, jedoch würde ihm auf diesem Wege die Möglichkeit beispielsweise zum Erhalten einer jeweils aktuellsten Dokumentfassung verwehrt.

Es folgt daher in einem Schritt S3 eine Statusabfrage über die Steuereinheit 18 und die lokale Prüfeinheit 38 und/oder die externe Prüfeinheit 46, ob es sich bei dem im Dokumentspeicher 30 gehaltenen Dokument 32 tatsächlich noch um ein ordnungsgemäß geschütztes, also in dem proprietären Datenformat vorhandenes Dokument handelt. Falls die Prüfungseinheiten 46 oder 48 dies bejahen, wird in einem Schritt S4 ein entsprechendes, positives Authorisierungssignal an die Steuereinheit 18 ausgegeben, worauf wiederum dann in Schritt S5 über die lokale Eingabeeinheit 16 geeignete Eingaben möglich sind, zum Beispiel die Abfrage, ob tatsächlich eine aktuelle Fassung des Dokuments geholt werden soll.

In Schritt S6 findet dann, je nach beabsichtigter Ausgabe bzw. Charakter des elektronischen Dokuments, eine Aufteilung in verschiedene, geeignete Verarbeitungsvorgänge entsprechend den Funktionskomponenten der Fig. 1 statt: So würde in Schritt S61 der Zugriff auf externe Dienstleistungen der Einheit 42 erfolgen, um z.B. den Update-Service des Remote-Host 14 zu nutzen. In S62 würden dann externe Zusatzdaten aus der Zusatzdateneinheit 42, z.B. eine Ergänzung der Textbeschreibung, herausgeladen werden können, um diese nachfolgend in das lokale Computersystem 10 zu übertragen. In diesem Vorgang könnte in Schritt S63 auch der externe Datenspeicher 44 Verwendung finden, z.B. als Pufferspeicher für die Datenübertragung. Schritt S64 macht dann Gebrauch von dem lokalen Datenspeicher 20, etwa um dort die empfangenen Daten zu puffern, und in Schritt S65 könnte eine lokale Update-Routine in der lokalen Serviceeinheit 24 benutzt werden, um auch auf dem lokalen Computersystem 10 die aktuelle Dokumentfassung herzustellen.

Entsprechend der beabsichtigten Ausgabe wird dann in mindestens einem der Schritte S71, S72, S73 eine Ausgabeverarbeitung durchgeführt, woraufhin dann in Schritt S8 die geeignete, lokale Ausgabe-Hardware zur Ausgabe aktiviert wird.

Im konkreten, vorliegenden Beispiel würde etwa über ein lokales Ausgabeprogramm gemäß Einheit 22 in Schritt S72 der Text auf einem Bildschirm (als Beispiel für eine Hardware-Einheit 28) ausgegeben werden, nachdem in Schritt S71 die zusätzlich empfangenen, aktuellen Informationen mittels der lokalen Serviceeinheit 24 in den Beschreibungstext eingefügt worden sind. Auch gäbe es dann die Möglichkeit, in einem Schritt S73 das Dokument mit möglichen Notizen oder anderen nützlichen Zusatzfunktionen in ein geeignetes Druckformat zu formatieren (Einheit 26), um dieses dann nachfolgend in S8 zusätzlich auf einem Drucker übersichtlich auszugeben.

Mit der Möglichkeit einer neuen Eingabe in Schritt S9 kehrt die in Fig. 2 gezeigte Routine an den Anfang zu Schritt S1 zurück, oder aber gestattet neue oder alternative Ausgabemöglichkeiten des -- bereits geprüften und damit für die zusätzlichen Operationen und/oder Daten autorisierten --Dokuments durch erneute Eingabe in Schritt S5.

Ein weiteres Beispiel wäre das Durchführen eines Computerspiels, welches als Dokument 32 in der Fig. 1 im Datenspeicher 30 enthalten ist. Dieses Computerspiel ist jedoch ohne aktuelle, über das Datenverarbeitungsnetz übertragene Zusatzinformationen, wie orientierende Grafiken oder Spielstrukturen, nur stark eingeschränkt zu benutzen.

Entsprechend findet durch Wirkung der zentralen Verarbeitungseinheit 18 sowie der lokalen und/oder externen Prüfungseinheit 46 in der oben beschriebenen Weise eine Autorisierung statt, bevor die zentrale Steuereinheit 18 diese zusätzlichen Daten über das Netzwerk 12 extern heranführen und lokal, etwa durch die Serviceeinheit 24, in das Spielprogramm zur Ausgabe auf den Bildschirm und/oder für die weiteren Schnittstelleneinheiten für den Benutzer aufbereiten kann.

Ein Dokument kann in einen feststehenden, fixen Teil und in einen variablen, veränderlichen Teil, der nicht unbedingt vorhanden sein muß, getrennt werden. Der feststehende Teil eines Dokumentes kann eine abgeschlossene Entität bilden. Dieser Teil kann auch als komplettes, unverkürztes Dokument auf den lokalen Rechner des Benutzers übertragen werden. Der variable Teil besteht aus anschließenden Änderungen innerhalb eines bereits übertragenden Dokumentes oder aus weiteren, hinzugefügten Daten zu dem lokal bereits vorhandenen Dokument oder aus den hinzugefügten Daten, die nur bei der visuellen und/oder akustischen und/oder mechanischen und/oder aromatischen Ausgabe auftreten.

Durch das Abspeichern von den Daten eines kompletten Dokumentes gibt es einen feststehenden, zeitlich invarianten Teil auf einem lokalen Rechner, der außerhalb der direkten Zugriffsmöglichkeiten eines Inhabers von Urheberrechten liegt. Dieser invariante Charakter eines Dokumentes fordert andererseits gerade die Verletzung des Urheberrechtes heraus. Der Erfindung zugrundeliegend steht demnach der Gedanke, dass einem Dokument ein variabler Teil angehängt werden muß, so dass dieser durch seinen Zusatznutzen den feststehenden, invarianten Teil vor unautorisierter Benutzung, die dabei nur unter Umgehung der bestehenden Verwendungsschutz-Mechanismen zustande kommt, zusätzlich absichert.

Der feststehende, invariante Teil eines Dokumentes bildet bei einem Dokument, das im Rahmen einer vorgegebener Softwareumgebung kein Potential für eine variable Änderung besitzt, ein abgeschlossenes, lokal vollständiges Gefüge. Diese lokale Vollständigkeit kann bei einem Dokument, das durch Online-Dienstleistungen variabel geändert oder erweitert werden kann, nur nach Offerierung der Online Zusatznutzen, im Rahmen des aktuellen Benutzungszusammenhanges, hergestellt werden.

In diesem Sinne liegen digitalen Musikdaten nach der Veröffentlichung oder öffentlichen Ausstrahlung bei dem Empfänger als feststehende Datenmenge vor. Diese Datenmenge kann, nachdem die darin enthaltenden Verwendungsschutzverfahren überwunden worden sind, ohne weitere technische Hinderungsgründe weiterverbreitet und unautorisiert verwendet werden. Diese feststehende Datenmenge kann aber durch weitere Zusatzinformationen ergänzt und in ihrem Nutzen verbessert werden. Da die zusätzlichen Informationen z.B. weitere Aktivitäten der Komponisten oder der Musiker sein können, kann der Zusatznutzen ständig veränderbar gehalten werden.

Allein schon die Möglichkeit im Rahmen von vorgegebenen Softwareschnittstellen variable zusätzliche Informationen bieten zu können, reicht bereits aus, den Eindruck entstehen zu lassen, dass etwas fehlt, wenn nicht der variable Teil abgefragt wurde, obwohl das Dokument eventuell ohne diese Zusatznutzen angeboten wurde.

Der Schaden von illegaler Verwendung hängt mit dem Verbreitungsgrad eines illegalen Dokumentes zusammen. Je mehr Benutzer ein solches Dokument besitzen, desto größer ist das Verbreitungspotential. Bei einem Dokument, dem gegebenenfalls einige Merkmale oder Informationen fehlen, wird zum einen nicht die Gefahr bestehen, dass der enthaltende Verwendungsschutz beseitigt wird. Zum anderen fehlt das Potential, dieses Musikstück weiterzugeben oder anzunehmen, da in jedem Fall eine Verwaltung der einzelnen Musiktitel notwendig und unerläßlich ist. Ohne diese zusätzliche Verwaltung besteht deshalb die Chance, dass ein illegales Dokument in der Masse anderer Daten verloren geht und somit die Wahrscheinlichkeit eines sich weiter verbreitenden Schadens in Grenzen hält. Besonders die Einschränkung, Musiktitel exponiert darzustellen oder leicht wiederauffindbar zu kennzeichnen, kann die Verbreitung illegaler Kopien behindern.

Über die oben beschriebenen Ausbildungen hinaus ist es möglich, die Prinzipien und Realisierungsformen der vorliegenden Erfindung durch einen konkreten Kopierschutzmechanismus sowie ein Übertragungsverfahren von elektronisch publizierten Dokumenten zu ergänzen, wie es in der deutschen Patentanmeldung 196 34 712 sowie der PCT-Anmeldung PCT/EP 97/03113 des Anmelders offenbart ist.

Die technische Lehre dieses Dokuments soll insbesondere hinsichtlich des konstruktiven Aufbaus der Übertragungsvorrichtung, der Aktualisierungs-, Datenaufbereitungs- und Verschlüsselverfahren sowie der Identifikation, Aktualisierung und Auswertung von Wortstellungen in einem Textdokument als vollumfänglich in die vorliegende Anmeldung einbezogen gelten.

Im weiteren sei ein weiterer Aspekt der vorliegenden Anmeldung beschrieben, welcher die vorbeschriebenen Ausführungsformen ergänzt und erweitert:

Die Sicherheit eines Dokumentes basiert in einer alternativen Ausführungsform auf der Unsicherheit, ob das veröffentlichte Dokument wirklich den ursprünglich korrekten Inhalt enthält oder nicht. Durch die Änderung der Position von wichtigen Worten innerhalb eines solchen Dokumentes kann der Kontext völlig zerstört werden. Durch das Weglassen des Wortes "nicht" innerhalb eines Satzes wird die darin enthaltene Aussage in ihr Gegenteil verkehrt. Worte mit der Eigenschaft, dass sie eine Aussage eines Satzes sehr stark verändern können, gibt es in jeder Sprache. Diese Worte können in einer Liste von strategischen Worten zusammengefaßt werden. Das Weglassen oder der Austausch eines dieser strategischen Worte innerhalb eines Textes kann im Rahmen einer vorhandenen sprachlichen Grammatik nicht erkannt werden.

Zu diesen strategischen Worten gehören in der deutschen Sprache die Worte: "nicht", "und", "oder". Außerdem können aneinanderreihende, ausschließende, entgegensetzende oder vergleichende Konjunktionen als Bindewörter so geändert werden, dass der Inhalt eines Satzes grammatisch korrekt bleibt. Auch Zahlwörter wie "eins", "zwei" etc. können ineinander umgewandelt werden, ohne dass es von einem unbedarften Leser erkannt werden kann.

In der gleichen Weise kann auch das Einfügen eines Wortes aus einer vorher festgelegten Wortliste den Inhalt eines Satzes innerhalb eines Dokumentes völlig ändern. Diese Änderung kann dann von einem Menschen, der mit dem Inhalt des Dokumentes nicht vertraut ist, nicht erkannt werden.

Darüber hinaus gibt es in den Thesauren zu sehr vielen Worten jeweils ein oder mehrere Worte mit der entgegengesetzten Bedeutung. Der Austausch dieser Wörter mit ihrem Gegenpart würde den Sinn und den früheren Kontext eines Dokumentes zerstören.

Die Unsicherheit, ob eine Änderung durchgeführt worden ist, besteht bereits dann, wenn eine Vorrichtung bereits vorhanden ist, die in der Lage ist, ein Dokument so zu verändern, dass der Inhalt unbemerkt eine neue, veränderte Bedeutung bekommt.

Die Vorrichtung zum Lesen und Benutzung dieser Dokumente besteht dann aus einem Ausgabemodul, dem dann die richtigen Informationen zur Positionierung von den strategischen Worten oder der korrekte Wert anstelle eines anderen Wortes über eine Online-Verbindung zugeleitet wird, wenn ein darüber hinausgehender Verwendungsschutz nicht beseitigt oder umgangen worden ist.

Die Vorrichtung zum automatischen aber gegebenenfalls durch Pseudozufall bestimmten Entfernen von strategischen Worten besteht aus einem Identifikationsmodul, das in der Lage ist, Worte aus einer bestehenden Liste in einem Dokument zu identifizieren und einem Extraktionsmodul, das in der Lage ist, diese identifizierten Worte zu löschen und anschließend Anweisungen so zu speichern, dass mit diesen Instruktionen nachträglich das Original wiederhergestellt werden kann.

Eine weitere Vorrichtung kann zudem in der Lage sein, Worte aus einer vorgegebenen Liste innerhalb von Sätzen so zu positionieren, so dass es innerhalb und mit einer Grammatik, die der Sprache zugrundeliegt, nicht erkannt werden kann, ob diese Worte ursprünglich ebenfalls an diesen Stellen innerhalb des Dokuments enthalten waren. Diese Vorrichtung muß deshalb mit Regeln arbeiten, die es erlauben, genau die Positionen zu identifizieren, bei der dieses Wort keinen grammatischen Fehler darstellen würde.

Nach der Identifikation dieser Positionen kann das Einfügen eines Wortes innerhalb des bestehenden Dokumentes durch ein Eingruppierungsmodul durchgeführt werden, wobei zusätzliche Arbeitsanweisungen generiert werden können, mit denen nachträglich der ursprüngliche Zustand wiederhergestellt werden kann.

## Patentansprüche

1. Vorrichtung zur geschützten Ausgabe eines elektronisch übertragenen und gespeicherten, mit einem elektronischen Kopierschutz (34) versehenen oder einem Kopierschutz unterliegenden Dokument (32), mit
- einer auf einem lokalen Computersystem (10) vorgesehenen Speichereinheit (30) zum Speichern des Dokuments und zum Bereitstellen desselben für die Ausgabe,
- einer mit der Speichereinheit (30) sowie mit einer externen Datenverarbeitungsanlage (14) über ein Datenkommunikationsnetz (12) zusammenwirkenden, lokalen Verarbeitungs- und Steuereinheit (18),
- die so ausgebildet ist, dass eine Zusatzoperation und/oder zusätzliche Daten mit dem Dokument als Reaktion auf mindestens einen Online-Kontakt über das Datenkommunikationsnetz verknüpft werden können und das verknüpfte Dokument zur Ausgabe aufbereitet werden kann, und einer mit der lokalen Verarbeitungs- und Steuereinheit verbundenen Ausgabeeinheit, die zum bestimmungsgemäßen Ausgeben des Dokuments ausgebildet ist,
**dadurch gekennzeichnet, dass**
- die mit der lokalen Verarbeitungs- und Steuereinheit verbundene Ausgabeeinheit (22-28) zum Ausgeben des verknüpften Dokuments ausgebildet ist und
- eine mit der Speichereinheit (30) sowie der Verarbeitungs- und Steuereinheit (18) zusammenwirkende Abfrage- und Prüfeinheit (36, 38; 46, 48; 50)vorgesehen ist, die zum Erfassen einer Verletzung und/oder Überwindung des Kopierschutzes des Dokuments eingerichtet ist und als Reaktion auf eine solche Verletzung und/oder Überwindung eine Erzeugung des verknüpften Dokuments durch die Verarbeitungs- und Steuereinheit verhindert,
- wobei die lokale Verarbeitungs- und Steuereinheit so ausgebildet ist, dass ein in der Speichereinheit gespeichertes Dokument in seiner gespeicherten Form auch durch eine Zusatzoperation sowie zusätzliche Daten unverändert bleibt.

2. Vorrichtung nach Anspruch 1, **dadurch gekennzeichnet, dass** die elektronischen Dokumente Textdaten und/oder Bild-/Grafikdaten aufweisen und die Zusatzoperation mindestens eine der Dienstleistungen Aktualisieren, Verwalten von Stichworten oder Notizen, elektronische Weitergabe und Austausch des Dokuments über das Datenkommunikationsnetz, Suche nach Stichworten sowie eine Schwarze-Brett-Funktion aufweist.

3. Vorrichtung nach Anspruch 1 oder 2, **dadurch gekennzeichnet, dass** die Zusatzdaten für eine Archivierung und/oder eine Aktualisierung des elektronischen Dokuments geeignete Daten aufweisen.

4. Vorrichtung nach einem der Ansprüche 1 bis 3, **gekennzeichnet durch** eine mit der Verarbeitungs- und Steuereinheit sowie der Abfrage- und Prüfeinheit zusammenwirkenden Kommunikationseinheit, die zum Herstellen und/oder Durchführen eines Dialogs mit einem in der externen Datenverarbeitungsanlage identifizierten Verfasser oder Informationsträger eines betreffenden Dokuments über das Datenkommunikationsnetz ausgebildet ist.

5. Vorrichtung nach einem der Ansprüche 1 bis 4, **gekennzeichnet durch** eine lokale und/oder in der externen Datenverarbeitungsanlage vorgesehene, über das Datenkommunikationsnetz angebundene Registrierungseinheit (48, 50), die als Reaktion auf die Abfrage- und Prüfeinheit zum Erfassen und Registrieren elektronischer Dokumente ausgebildet ist.

6. Vorrichtung nach nach einem der Ansprüche 1 bis 5, **dadurch gekennzeichnet, dass** eine Einrichtung zum Herstellen eines Dokumentzustandes dahingehend vorgesehen ist, dass mindestens ein bevorzugt strategisches Wort in einem einen Text aufweisenden Dokument entfernt, in seiner Position vertauscht und/oder gegen ein anderes Wort ausgetauscht worden ist, wobei bevorzugt ein solches Wort eine Konjunktion, ein Zahlwort oder ein Verb ist.

7. Verfahren zur geschützten Ausgabe eines elektronisch übertragenen und gespeicherten, mit einem elektronischen Kopierschutz versehenen oder einem elektronischen Kopierschutz unterliegenden Dokument, insbesondere zum Betreiben der Vorrichtung nach einem der Ansprüche 1 bis 6, **gekennzeichnet durch** die Schritte:
- Auslesen eines Dokuments aus einer auf einem lokalen Computersystem vorgesehenen Speichereinheit,
- Prüfen, ob der elektronische Kopierschutz des Dokuments verletzt oder überwunden ist,
- Verknüpfen des elektronischen Dokuments mit einer über ein Datenkommunikationsnetz herangeführten Zusatzoperation und/oder mit zusätzlichen Daten als Reaktion auf ein Prüfergebnis der Prüfung, dass keine Verletzung und/oder Überwindung des Kopierschutzes stattgefunden hat, und
- Ausgeben des verknüpften Dokuments auf einer im lokalen Computer System vorgesehenen Ausgabeeinheit.

8. Verfahren nach Anspruch 7, **gekennzeichnet durch** das Durchführen eines bevorzugt verschlüsselten Online-Kontaktes mit einer externen Datenverarbeitungsanlage für das Heranführen vor dem Schritt des Verknüpfens.

## Claims

1. A device for the protected output of an electronically transmitted and stored document (32) which is provided with an electronic copy protection (34) or subjected to a copy protection, comprising
- a memory unit (30) provided for on a local computer system (10) for storing the document and placing the same ready for output,
- a local processing and controlling unit (18) cooperating with the memory unit (30) and with an external data processing unit (14) via a data communications network (12),
- which processing and controlling unit is designed so that an additional operation and/or additional data can be linked with the document via the data communications network as a reaction to at least one online contact, and that the linked document can be prepared for the output, and comprising an output unit connected with the local processing and controlling unit, said output unit being designed for the intended output of the document,
**characterized in that**
- the output unit (22-28) connected with the local processing and controlling unit is designed for the output of the linked document, and
- a scanning and checking unit (36, 38; 46, 48; 50) cooperating with the memory unit (30) as well as with the processing and controlling unit (18) is provided for, which scanning and checking unit is designed for recording a violation and/or an overcoming of the copy protection of the document and, as a reaction to such a violation and/or overcoming, prevents the generation of the linked document by the processing and controlling unit,
- the local processing and controlling unit being designed so that a document saved in the memory unit remains unchanged in its saved form even when applying an additional operation as well as additional data.

2. A device according to claim 1, **characterized in that** the electronic documents include text data and/or picture/graphics data and that the additional operation comprises at least one of the services: updating, management of keywords or notes, electronic transmission and exchange of the document via the data communications network, searching for keywords, as well as a blackboard function.

3. A device according to claim 1 or 2, **characterized in that** the additional data include appropriate data for archiving and/or updating the electronic document.

4. A device according to one of the claims 1 to 3, **characterized by** a communication unit cooperating with the processing and controlling unit as well as with the scanning and checking unit, which communication unit is designed for generating and/or carrying on a dialogue via the data communications network with an author or information carrier of a respective document, which is identified in the external data processing unit.

5. A device according to one of the claims 1 to 4, **characterized by** a local registration unit (48, 50) connected via the data communications network and/or a registration unit which is provided for in the external data processing unit, which registration unit is designed for recording and registering electronic documents as a reaction to the scanning and checking unit.

6. A device according to one of the claims 1 to 5, **characterized in that** an equipment for producing a document state is provided for in such a way that at least one preferably strategic word is removed from a document which includes a text, that its position is changed and/or the word is exchanged with another word, such a word preferably being a conjunction, a numeral or a verb.

7. A process for the protected output of an electronically transmitted and stored document which is provided with or subjected to an electronic copy protection, particularly for operating the device according to one of the claims 1 to 6, **characterized by** the following steps:
- reading a document out of a memory unit provided for on a local computer system,
- checking whether the electronic copy protection of the document has been violated or overcome,
- linking the electronic document with an additional operation fed via a data communications network, and/or with additional data as a reaction to a result of the checking that no violation and/or overcoming of the copy protection has taken place, and
- output of the linked document on an output unit provided for in the local computer system.

8. A process according to claim 7, **characterized by** the realization of a preferably encoded online contact with an external data processing unit for the feeding prior to the linking step.

## Revendications

1. Dispositif pour la sortie protégée d'un document (32) stocké, transmis électroniquement, muni d'une protection électronique (34) en copie ou soumis à une protection en copie, comprenant
- une unité mémoire (30) prévue sur un système informatique local (10) pour le stockage du document et pour la mise à disposition de ce dernier en vue de sa sortie,
- une unité de commande et de traitement (18) locale agissant en coopération avec l'unité mémoire (30) ainsi qu'une installation externe de traitement de données (14) par l'intermédiaire d'un réseau de communication de données (12),
- L'unité de commande étant réalisée de sorte qu'une opération supplémentaire et/ou des données supplémentaires puissent être enchaînées avec le document en réaction avec d'au moins un contact en ligne établi par le réseau de communication de données et le document enchaîné peut être préparé pour la sortie et comprenant une unité d'édition, reliée à l'unité locale de traitement et de commande, destinée à la sortie définie du document,
**caractérisé en ce que**
- l'unité de sortie (22-28) reliée à l'unité locale de traitement et de commande est destinée à la sortie du document enchaîné et
- **en ce qu'**il est prévu une unité d'appel sélectif et de contrôle (36, 38 ; 46, 48 ; 50) coopérant avec l'unité de traitement et de commande (18) et l'unité mémoire (30), unité qui est agencée pour la saisie d'une violation ou d'un franchissement de la protection en copie du document et empêche en réaction à une telle violation ou franchissement une génération du document enchaîné par l'unité de traitement et de commande,
- l'unité locale de traitement et de commande étant conçue pour qu'un document stocké dans l'unité mémoire reste sous sa forme stockée également lors d'une opération supplémentaire ainsi que par l'ajout de données supplémentaires.

2. Dispositif selon la revendication 1, **caractérisé en ce que** les documents électroniques présentent des données textes et/ou des données d'images/graphiques et l'opération supplémentaire présente au moins l'une des prestations, telles que l'actualisation, la gestion de mots-clés ou de notes, la transmission électronique et l'échange de documents par l'intermédiaire du réseau de communication de données, la recherche par mots-clés ainsi qu'une fonction de tableau noir.

3. Dispositif selon la revendication 1 ou 2, **caractérisé en ce que** les données supplémentaires présentent des données appropriées à l'archivage et/ou à une actualisation du document électronique.

4. Dispositif selon l'une des revendications 1 à 3, **caractérisé par** une unité de communication coopérant avec l'unité de traitement et de commande ainsi qu'avec l'unité d'appel sélectif et de contrôle, unité de communication qui est destinée à l'établissement et/ou à la réalisation d'un dialogue avec un auteur ou un support d'information d'un document concerné, identifié dans l'installation de traitement de données, par l'intermédiaire du réseau de communication de données.

5. Dispositif selon l'une des revendications 1 à 4, **caractérisé par** une unité locale d'enregistrement (48, 50) et/ou prévue dans l'installation externe de traitement de données, reliée au réseau de communication de données, qui est destinée à la saisie et à l'enregistrement de documents électroniques en réaction à l'unité d'appel sélectif et de contrôle.

6. Dispositif selon l'une des revendications 1 à 5, **caractérisé en ce qu'**il est prévu un dispositif pour la réalisation d'un état de document pour qu'au moins un mot, de préférence stratégique, ai été supprimé dans un document présentant un texte, échangé dans sa position et/ou remplacé par un autre mot, un tel mot étant de préférence une conjonction, un numéral ou un verbe.

7. Procédé pour la sortie protégée d'un document stocké, transmis électroniquement, muni d'une protection électronique en copie ou soumis à une protection en copie en particulier pour la mise en oeuvre du dispositif selon l'une des revendications 1 à 6, **caractérisé par** les étapes suivantes :
- Lecture d'un document stocké dans une unité mémoire prévue dans un système informatique local,
- Contrôler si la protection en copie du document a été violée ou franchie,
- Enchaînement du document électronique avec une opération supplémentaire amené par un réseau de communication de données et/ou avec des données supplémentaires en réaction à un résultat du contrôle qu'aucune violation et/ou franchissement de la protection en copie ne s'est produite et
- Sortie du document enchaîné sur une unité de sortie prévue dans le système informatique local.

8. Procédé selon la revendication 7, **caractérisé par** l'établissement d'un contact en ligne de préférence codé avec une installation externe de traitement de données pour l'amenée avant l'étape de l'enchaînement.
